# EUROPEAN PATENT SPECIFICATION

(11) **EP 0 518 804 B1**
(45) Date of publication and mention of the grant of the patent: **02.08.1995**
(21) Application number: 92500074.7
(22) Date of filing: 12.06.1992
(51) Int. Cl.: B21D 39/03

(54) **Procedure for cramping by riveting, cramping obtained by this procedure and tool to perform the cramping**
Verfahren zum Verbinden, durch Nieten, durch dieses Verfahren hergestellte Verbindung und Vorrichtung zum Herstellen
Procédé d'assemblage par rivetage, assemblage obtenu par ce procédé et appareil pour exécuter cet assemblage

(30) Priority: 14.06.1991 ES 9101438
(43) Date of publication of application: 16.12.1992
(73) Proprietor: BATZ, S. COOP. LTDA., E-48140 Igorre (Bizkaia) (ES)
(72) Inventor: Urigoitia, Jaime, E-48960 Usansolo-Galdako (Bizkaia) (ES)
(74) Representative: Urteaga Simarro, José Antonio

(56) References cited:
- DE-B- 1 125 871
- FR-A- 1 538 218
- GB-A- 2 150 474

## Description

The patent deals with a procedure for cramping according to the preamble of claim 1, as for example known from GB-A-2 150 474.

In the manufacture of certain types of parts, it is sometimes necessary to have to carry out a cramping operation between one section of the part, which is provided with recesses, and another section of the same, equipped with lugs. Such is the case, for example, with the body of a mechanical jack, in which this is to be found at the end of jacks where the jack rests on the ground to carry out its function as a base or support.

Usually, manufacture of this part is carried out in a progressive stamping machine, which performs a series of operations on the initial part, the last of which consists of bending or doubling of an end fin over the fronts of the longitudinal sides. After this last operation, the fin is later welded to the said fronts in order to terminate both ends, which means another operation to finish the product.

Another method of performing the cramping consists of making a perforation or hole in the fin of the part which is bent or doubled and a lug in the other section, so that the lug is folded over the fin, once that the fin has received the said lug.

This form of operation is generally unstable given that there is always the risk of springback in the lug, and in any case it is practically impossible to prevent the existence of some looseness or play in the assembly once that the cramping has been performed.

Another solution for performing the cramping is described in Patent GB.A.2150474, according to which a hole is cut in one part and a projection with inclining side walls in the other, Both parts are placed face to face, so that the projection becomes housed in the hole and protrudes out beyond the surface of the said part with the hole.

Next, the projection is pressed down by means of the action of a suitable tool, so that it forms two projections on the outer face of the part provided with holes.

Moreover, as can be deduced from the said document, the operation must be carried out while the metal is hot, which complicates the cramping operation.

The invention proposes and claims a different method of performing the cramping whose fundamental aim is to provide a stable assembly, totally free of any play or looseness and carried out in the same bending operation of the fin of a section of a specific part.

The cramping in question can be carried out between two sections or portions of one specific part or between two sections of two different parts, as will be described throughout this specification.

Preferably, the cramping by riveting which is claimed is carried out in a progressive die, as one more sequence of those which normally take place to produce a certain part.

As was mentioned earlier, one of the two portions to be cramped is provided with perforations or windows, preferably square in shape, while the other portion will be provided with lugs which correspond to the perforations an shape and are logically of a smaller size. In this situation the assembly is situated in a progressive dieing or stamping press, for example in the last operative stage of the stamping machine.

At this point, the core of the stamping or dieing machine strikes the fin provided with the windows or perforations, inciding on it so that it bends the said fin until the lug starts to become housed inside the window in the fin and protrudes out from it.

The surface of the core that incides on the fin is provided with a series or grooves or recesses which are performed starting from a lower edge and equal in number to the lugs and windows to be cramped. These grooves have a base surface and a wedge-shaped vertical projection which juts out from this base, in such a way that both the grooves and the wedges are of a specific length.

Ar the same time that the core is bending the fin and the lug protrudes from the window, each of the wedges mentioned incides on one of the lugs so as to carry out a longitudinal cut on the lug while providing pressure on the fin and on the said lugs. As a result of all this, two lips are formed ob the lug, which become riveted against the outer surface of the fin, so that cramping by riveting between the two parts to be joined or between the two sections of one same part to be cramped, has been formed.

The wedge in the groove in the core can be divergent as a whole starting from the lower end of the said core or can either be provided with an end wedge-shaped section, so that in any case it carries out the splitting of the protruding lug. The point or most upstanding plane of the wedge will correspond with the central separation line of the lug, while the plane of the base from which the wedge starts will correspond with the most protruding portion of the lugs once that they have been bent and riveted.

Obviously, the middle plane of the core will correspond with the outer plane of the fin which is bent or doubled over the lugs.

As a result of this form of operation, a slight creepage is produced of the protruding area of the lug, which, however, does not prevent the perfect cramping of the said lug onto the fin.

As has been previously pointed out, the fin and the lug might form part of one same body. Such would be the specific case of application for the end of the body of a vehicle jack or for similar bodies. In this case, the lugs start from an upper edge of the part, and the cramping operation by riveting is carried out like an operation which forms part of a normal process in a progressive die.

However, the patent is also applicable to different parts which are required to be cramped together, which only require the parts to be situated in a suitable position to be cramped together by riveting, either if the lugs come from an edge of one of the parts or from a surface area of the same part.

The invention will become more clearly defined in the following embodiment with the help of the two attached sheets of drawings, which are included for further guidance and represent the following:
- Figure 1 is a cross-section elevation of the last sequence carried out in a progressive die, in accordance with what is claimed.
- Figure 2 is an enlarged detail of the entry area of the lug into the window in the fin, all referring to figure 1.
- Figure 3 is an end elevation in a typical case of cramping to be carried out by the invention.
- Figure 4 is a perspective which shows a detail of the edge of a part with the lug protruding.
- Figure 5 represents a front view of the work face of the core, in accordance with the invention.
- Figure 6, represents an enlarged detail of the grooves or recesses in the core, with the wedges at their bases.
- Figure 7 is an external plan view of the end of the body of a vehicle jack, carried out according to the invention.
- Figure 8 is a view from the left of the above, with a detail of the cramping by riveting.
- Figure 9 is a view from above of figure 7, with a detail of the cramping.
- Figure 10 is a cross-section of a solution for cramping by riveting, in which the lug comes from a surface.

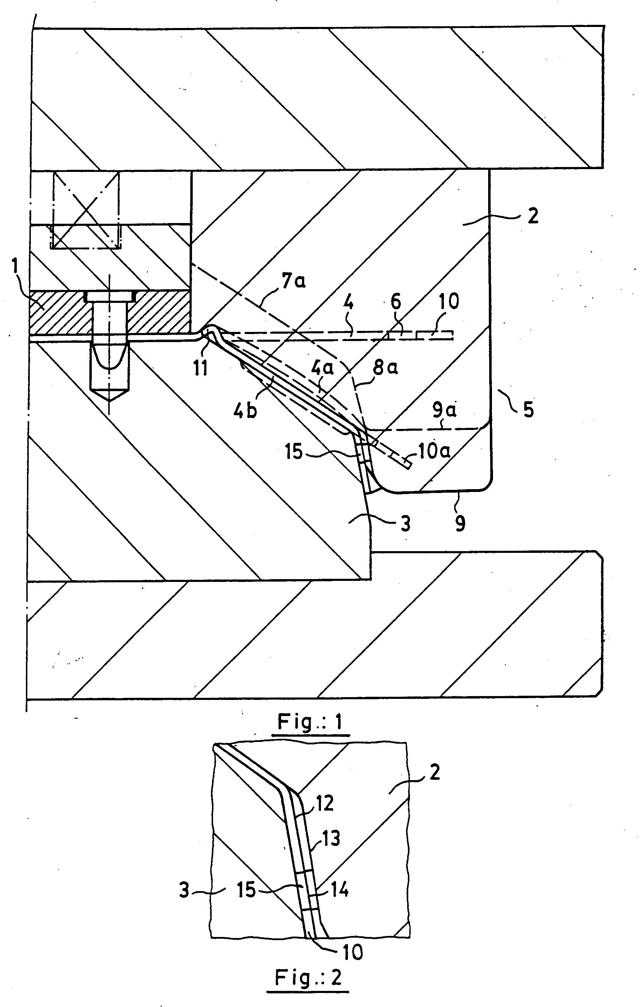

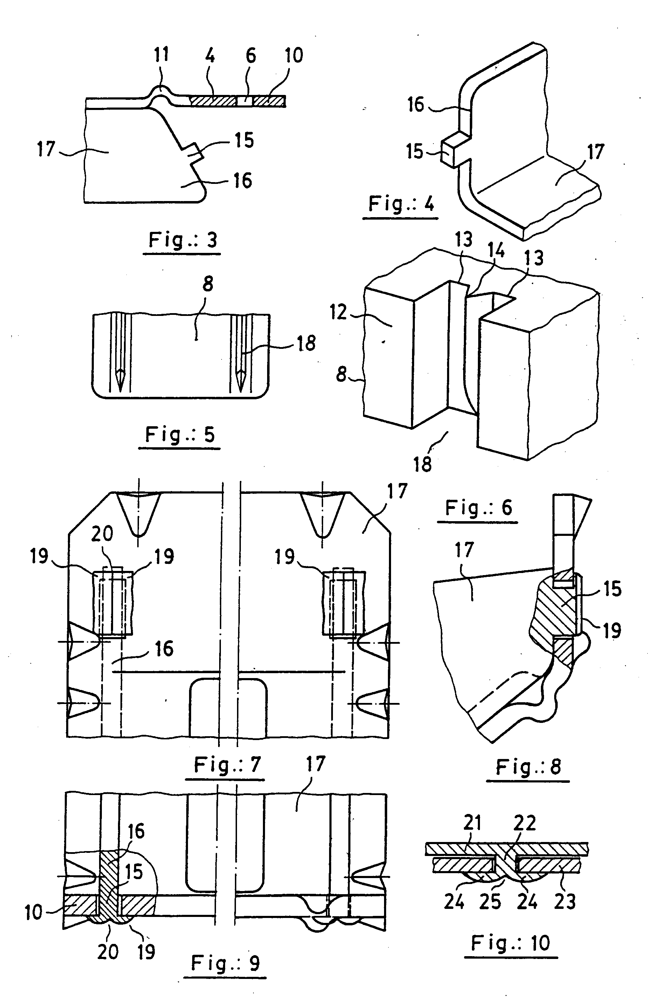

In accordance with figure 1, we wish to point out in this assembly (5), how a specific part (11)-(15)-(4)-(6)-(10), is to be found situated on the core (3), fixed in position by the treader plate (1), waiting to receive the action of the upper core or ram (2). The part to be worked corresponds, in this case, to the one shown in figure 3. As the upper core or ram (2) starts to move downwards, it first makes contact with the fin (4), bending it at the inflection point (11) until it occupies the position shown by (4a)-(10a). In this position, the lower line of the core is represented by the positions (7a), (8a) and (9a). As the upper core (2) continues to descend, the lug (15) is inserted into the hole (6) and almost at the end of the stroke, the cramping by riveting is produced.

We can also appreciate, in figure 2, with the cores (3) and (2) in their lowest position, how the lug (15) has become housed in the hole in the fin (10). In this position, three planes are formed, (13), (12), and (14), whose significance bears a relation to the position of the wedge in the core (2), as will be explained later.

The face (8), fig. 5, of the core (2) is provided with grooves or recesses that start from its lower end and inside of which there are some wedge shapes (18) that stand out, corresponding in number and position with the lugs that need to be cramped.

In figure 6 it is possible to appreciate the situation of the said grooves or recesses in greater detail, with the wedges rising from their bases (13) and establishing a projecting line (14). The front plane (12) of the core is forward in relation to the projecting plane or line (14) of the wedge and this, in its turn, is forward of the base (13) from which it rises.

When the line (14) of the wedge (18) has incided on the lug (15), it causes two lips (19), fig. 9, to be formed, which are then riveted onto and against the outer face of the fin (10), after which the plane (12) of the face of the core will correspond with the outer plane of the said fin (10), the projecting plane or line (14) of the wedge will correspond with the base (20) of the central line of the lug cut by the wedge, and the base plane (13) with the highest area of the lips (19) into which the lug (15) has been separated.

The shape into which the cramping by riveting that is claimed becomes established can be appreciated perfectly in figs. 7, 8 and 9, taking into account that the working direction of the core is from the bottom upwards in relation to the positions of figs. 7 and 8. As the wedge (18) incides on the lug (15) protruding from the hole (6) in the fin (4)-(10), a cut is produced in the lug along the centre line (20), which causes the creation of the lips (19) on both sides of the said centre line and at the same time the fitting or seating of the lips onto the outer surface of the fin (10), so that they become practically locked together with the said surface.

In figures 7 and 8, it is possible to appreciate the slight upwards creepage of the lips (19), according to the position of the figures, which does not mean any detriment to the stable characteristics of the cramping.

If the parts (21) and (23), fig. 10, to be cramped should be different, that is, one is provided with the fin and the other with the lug, the final situation would correspond with what is illustrated in the said fig. 10, with a centre line (25) produced by the wedge and the lips (24) perfectly secured to the outer surface of (23).

In the example shown in figs. 7, 8 and 9, the part (17) is the end of the body of a vehicle jack in the cramping position, with this arrangement being reached starting from the sequence shown in fig. 3, which is the last operative step for its inclusion into a progressive stamping or dieing machine, as is shown in fig. 1.

Another assembly that would need to be considered for carrying out the cramping described in fig. 10, as well as for other different performances, are covered by the patent.

It is important to point out, once having described the nature and advantages of this invention, the non-restrictive character of the same, inasmuch as changes in the shape, material or sizes of its constituent parts will not in any way alter its essentiality, as long as they do not mean a substantial variation in the whole.

## Claims

1. Procedure for cramping by riveting using a tool to perform the cramping, to carry out the connection between two portions of two different parts or between two portions of the same part, in which a first portion (4, 10) has to be bent and secured by cramping to a second portion (17), with a perforation (6) cut in the first portion (4, 10) and a projection in the second portion (17), with this projection being submitted to pressure so that it becomes bent over the exterior of the first portion (4, 10), which is characterized by the carrying out of the following operations:
- the provision, on one face, of a core (2) and, starting from a lower edge, at least one vertical longitudinal recess, which provides a base (13), from the central area of which a longitudinal wedge (18) protrudes, with the outer edge (14) of this wedge being in a backward plane in relation to the front surface (12) of the core, in that the wedge starts from the edge with an initial portion which progressively increases from a lower point that opens in divergence in accordance with a frontal plane and a side plane until it extends with a constant cross-section,
- at least one lug (15) is formed on the second portion (17) which has to be cramped, with the shape of this lug corresponding to that of the perforation although slightly smaller in size,
- both portions are arranged in a progressive stamping or dieing machine, with the first portion fastened in place by a treader plate (1) which is applied onto an area of the said first portion against a fixed core (3), leaving free the area in which the perforation has been made below a moving core or ram (2), while the second portion is fixed by the treader plate to the fixed core in such a way that the area in which the lug has been made moves forward of the front of the fixed core and below the area in the first portion provided with the perforation,
- the moving core or ram (2) is made to move towards the fixed core (3) in such a way that it puts pressure on the first portion provided with the perforation, bending the said first portion over the second portion and inserting the lug (15) on the second portion into the perforation (6) in the first portion until the said lug goes through and protrudes from the said perforation,
- the vertical wedge (18) acts simultaneously on the protruding section of the lug (15) on the second portion (17), cutting the said protruding section into two lips (19) while at the same time the said lips are bent and pressed against the outer surface of the first portion.

2. Procedure in accordance with claim 1, characterized in that the two portions which are cramped (17)-(4, 10) correspond or belong to the same part.

3. Procedure in accordance with claim 1, characterized in that the two portions which are cramped together (21)-(23) correspond to two different parts.

4. Procedure in accordance with claim 1, characterized in that the number of wedges in the leading or attack face of the core is equal to the number of lugs and to the number or perforations in the portions to be cramped together.

5. Procedure in accordance with claim 1, characterized in that the front plane (14) that forms the ridge of the wedge (18) corresponds with that of the separated central area (20) of the lug of one of the portions and the vertical plane of the base (13) from which the wedge (18) rises corresponds with that of the highest part of the bent lugs or lips (19) into which the lug from the said portion has been divided.

6. Procedure in accordance with claims 1 and 5, characterized in that the cross-sectional elevation of the wedge (18) is preferably of a V-shape and is divergent from its lower end.

7. Procedure in accordance with claims 1, 2 and 3, characterized in that the portion of the parts to be joined that is provided with a lug, is an edge.

8. Procedure in accordance with claims 1, 2 and 3, characterized in that the portion of the parts to be joined that is provided with a lug, is a surface.

9. Procedure in accordance with claim 1, characterized in that the wedge is divergent throughout its whole lenght.

## Patentansprüche

1. Verfahren zum Klammern durch Mieten mittels eines Werkzeugs, wodurch zwei Teilflächen verschiedener Teile bzw. desselben Teils zusammen genietet werden, indem eine erste Teilfläche (4, 10) verbogen und auf die zweite Teilfläche (17) mittels eines in der ersten Teilfläche (4, 10) gestanzten Lochs (b) und eines Vorsprungs (17) in der zweiten Teilfläche derart befestigt wird, daß der Vorsprung durch den auf dem Umfang darauf geübten Druck um der ersten Teilfläche (4, 10) verbogen wird, gekennzeichnet durch die Durchführung der nachstehenden Aufgaben:
- Durchführung einer Längsaussparung an einer Fläche eines Kernen (2) ausgehend von derer unteren Kante, was eine Auflage (13) bildet, auf deren Mittelfläche ein Längskeil (18) hervorsteht, dessen andere Ende (14) sich in einer schrägen Ebene bezüglich der Frontfläche (12) des Kernen befindet, von dem der Keil mit einer ersten Strecke vom niedrigstem Punkt an aufwärts beginnt, indem diese Strecke bezüglich der Frontebene und einer Seitenebene allmählich aufweitet, bis einer konstante Querschnitt erreicht wird,
- Durchführung von mindestens einen Ansatz (15) auf der zweiten Teilfläche (17), die geklammert werden muß , indem die Form des Ansatzes ähnlich des gestanzten Loches ist, auch wenn geringfügig kleiner,
- beide Teilflächen werden in einer Werkzeugmaschine gelegt, mit der ersten Teilfläche in einer Einführungsplatte (1) gespannt, die auf einem Teil der ersten Teilfläche gegen einem festen Kernen (2) aufliegt, indem die Fläche frei gibt, in der das loch gestanzt sein wird, unter dem beweglichen Kern oder Hammer (2), während die zweite Teilfläche mittels der Einführungsplatte auf dem festen Kern gespannt wird, so daß die Fläche, in der Ansatz praktiziert wurde, vorwärts zu der vorderen Seite des festen Kernes bewegt, bzw. unter die Fläche der ersten mit Stanzloch versehenen Teilfläche,
- der bewegliche Kern oder Hammer (2) wird gegen den festen kern (3) gedrückt, so daß es auf der ersten mit Stanzloch versehenen Teilfläche einen Druck geübt wird, durch den diese erste Strecke über die zweite Strecke gebogen wird, wobei der Ansatz (15) auf der zweite Teilfläche in das Loch (6) der ersten Teilfläche hindurgedrückt und aus der anderen Seite hinausgeht,
- der Vertikalkeil (18) wirkt gleichzeitig auf der vorspringenden Seite des Ansatzes (15) auf der ersten Teilfläche (17), schneidet das vorspringende Stück in zwei Lippen (19) mit gleichzeitigem Biegen und Pressen von beiden Lippen gegen die Ausserseite der ersten Teilfläche,

2. Verfahren gemaß Anspruch 1 dadurch gekennzeichnet, daß die zwei zu klemmenden Teilflächen (17)-(4, 10) demselben Teil gehören.

3. Verfahren gemäß Anspruch 1 dadurch gekennzeichnet, daß die zwei zu klemmenden Teilflächen (21)-(23) zwei verschiedenen Teilen gehören.

4. Verfahren gemaß Anspruch 1 dadurch gekennzeichet, daß die Anzahl Keile in der Eingansfläche des Kernen gleich der Anzahl Ansätze und der Anzahl Löcher in der zu klemmenden Teilfläche ist.

5. Verfahren gemäß Anspruch 1 dadurch gekennzeichnet, daß die durch die Spitze des Keils (18) gebildete Frontebene (14) mit der Ebene ausserhalb der Mittefläche (20) des Ansatzes einer der Teilflächen übereinstimmt, und daß die Vertikalebene der Auflage (13) aus der Keil (18) steigt, mit der Ebene des höchsten Teils der gebogenen Lippen (19), die aus der Teilung des Ansatzes gebildet worden sind, übereinstimmt.

6. Verfahren gemäß Ansprüche 1 und 5 dadurch gekennzeichnet, daß die Höhe des Teilquerschnitts des Keiles (18) vorzüglich V-förmig und anders als das niedrige End ist.

7. Verfahren gemäß Ansprüche 1, 2 und 3 dadurch gekennzeichnet, daß die Teilfläche der zusammenzunietenden Teile, die über einen Ansatz verfügt, eine Kante ist.

8. Verfahren gemaß Ansprüche 1, 2 und 3 dadurch gekennzeichnet, daß die zusammenzunietende Strecke der Teile mit einem Ansatz eine Fläche ist.

9. Verfahren gemaß Anspruch 1 dadurch gekennzeichnet, daß der Keil anders durch die ganze Länge ist.

## Revendications

1. Procédé d'encliquetage par rivetage utilisant un outil en vue de réaliser ledit encliquetage, pour effectuer la jonction entre deux portions de deux pièces différentes ou entre deux portions d'une seule pièce, dans laquelle une première portion (4, 10) doit être repliée et rattachée à une seconde portion (17), à l'aide d'une perforation dans la première (4, 10) et d'une patte sur la seconde (17), cette patte étant soumise à pression de sorte qu'elle se trouve repliée vers l'extérieur de la première portion (4, 10), ce qui se caractérise en réalisant les opérations ci-après:
- la mise en place, sur un côté, d'une aléseuse (2) et, partir du bord le plus bas, d'au moins un évidement longitudinal en verticale, lequel offre ainsi une base (13), de la partie centrale de laquelle ressort une clavette longitudinale (18) en saillie avec le bord extérieur (14) de cette clavette, laquelle se trouve en arrière par rapport à la surface d'attaque (12) de l'aléseuse, étant donné que la clavette part du bord à partir d'une portion initiale qui augmente progressivement à partir du point le plus bas et s'ouvre en s écartant sur un plan frontal et un plan latéral jusqu'à s'étendre selon une section transversale constante,
- au moins un ergot (15) est formé sur la seconde portion (17) devant être encliquetée, la forme de cet ergot correspondant à celle de la perforation, bien que de taille légèrement inférieure à celle-ci,
- les deux portions sont formées dans une matriceuse ou outillage à séquence, la première portion étant fixée et mise en place par un pilon (1) lequel est appliqué sur une face de ladite première portion contre un aléseur fixe (3), pour laisser libre la zone sur laquelle doit être percée la perforation en dessous d'une aléseuse mobile ou mandrin (2), alors que la seconde portion est fixée par le pilon à la clavette fixe, de sorte que la zone où l'ergot doit être réalisé se déplace devant la face de l'aléseuse fixe et en-dessous de la zone de la première portion où se trouve la perforation,
- l'aléseuse mobile ou mandrin (2) est prévue de manière à se déplacer vers l'aléseuse fixe (3) de sorte de faire pression sur la première portion dans laquelle est pratiquée la perforation, ladite première portion venant se replier sur la seconde et l'ergot (15) allant s'insérer sur la seconde portion dans la perforation (6) de la première portion jusqu'à ce que ledit ergot traverse et fasse saillie hors de ladite perforation,
- la clavette verticale (18) agit simultanément sur la section saillante de l'ergot (15) sur la seconde portion (17), en coupant ladite section saillante en deux lèvres (19) tandis que dans le même temps lesdites lèvres sont repliées et comprimées contre la surface externe de la première portion,

2. Procédé suivant revendication 1, se caractérisant par le fait que les deux portions qui se trouvent encliquetées (17)- (4, 10) correspondent ou appartiennent à la même pièce.

3. Procédé suivant revendication 1, se caractérisant par le fait que les deux portions qui se trouvent encliquetées l'une à l'autre (21) (23) correspondent à deux pièces différentes.

4. Procédé suivant revendication 1, se caractérisant par le fait que le nombre de clavettes sur la face d'attaque de l'aléseuse est égal au nombre d'évidements et au nombre de perforations pratiquées dans les portions à encliqueter les unes aux autres.

5. Procédé suivant revendication 1, se caractérisant par le fait que la face d'attaque (14) qui forme l'arête de la clavette (18) correspond à celle de la zone centrale séparée (20) de l'ergot de l'une des portions et la face verticale de la base (13) de laquelle la clavette (18) part correspond pour sa part à celle de la partie la plus élevée des ergots repliés ou lèvres (19) dans laquelle l'ergot sortant de ladite portion s'est trouvé divise.

6. Procédé suivant revendications 1 et 5, se caractérisant par le fait que l'élévation de la clavette (18) de section transversale est de préférence en forme de V et s'écarte de son extrémité inférieure.

7. Procédé suivant revendications 1, 2 et 3, se caractérisant par le fait que la portion des pièces à joindre munie d'un ergot est un bord.

8. Procédé suivant revendications 1, 2 et 3, se caractérisant par le fait que la portion des pièces à joindre munie d'un ergot est une surface.

9. Procédure suivant revendication 1, se caractérisant par le fait que le bord s'écarte sur toute sa longueur.
